Europäisches Patentamt

**European Patent Office**

Office européen des brevets

(11) Veröffentlichungsnummer: **0 009 472**
**B1**

(12)

# EUROPÄISCHE PATENTSCHRIFT

(45) Veröffentlichungstag der Patentschrift:
**17.02.82**

(21) Anmeldenummer: **79890031.2**

(22) Anmeldetag: **13.09.79**

(51) Int. Cl.³: **E 04 C 2/52**, E 04 B 1/76,
B 21 D 53/00 // F24J3/02

(54) **Mehrzweck-Bauelement, insbesondere Wärmetauscher, sowie Verfahren und Vorrichtung zu seiner Herstellung.**

(30) Priorität: **13.09.78 AT 6619/78**

(43) Veröffentlichungstag der Anmeldung:
**02.04.80 Patentblatt 80/7**

(45) Bekanntmachung des Hinweises auf die Patenterteilung:
**17.02.82 Patentblatt 82/7**

(84) Benannte Vertragsstaaten:
**CH DE FR IT**

(56) Entgegenhaltungen:
**AT-B-284 981**
**DE-A1-2 540 497**
**DE-U-7 540 889**
**US-A-3 823 703**

(73) Patentinhaber: **Jäger, Walter, Villacherstrasse 32,**
**A-9300 St.Veit/Glan (AT)**

(72) Erfinder: **Jäger, Walter, Villacherstrasse 32,**
**A-9300 St.Veit/Glan (AT)**

(74) Vertreter: **Kretschmer, Adolf, Dipl-Ing.,**
**Schottengasse 3a, A-1014 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Mehrzweck-Bauelement, insbesondere Wärmetauscher, sowie Verfahren und Vorrichtung zu seiner Herstellung

Die Erfindung bezieht sich auf ein Mehrzweck-Bauelement, insbesondere Wärmetauscher, mit einem Träger aus einer flexiblen langgestreckten Bahn, wobei an dem Träger Leitungskanäle angeordnet sind, und die aus Träger und Leitungskanälen gebildete Einheit um eine quer zur Längsachse des Trägers verlaufende Achse aufrollbar ist, welches als Abdeckung, Verkleidung, Wärmetauscher, Deckenisolierung, Fassade, Dachelement od. dgl., eingesetzt werden kann, sowie auf ein Verfahren und eine Vorrichtung zu seiner Herstellung.

Für den bevorzugten Einsatz als Wärmeaustauscher sind plattenförmige Bauelemente bekannt, welche in bestimmten Längen und Größen vorgefertigt werden. Dies gilt vor allem für die bekannten Sonnenkollektoren, sowie Wärmetauscher, Fassadenelemente u. dgl. Derartige plattenförmige Wärmetauscher sind in der Regel nur in einer geringen Anzahl verschiedener Größen lieferbar und es handelt sich hierbei darüber hinaus zumeist um schwere und damit auch schwer zu transportierende Einheiten, welche nur für bestimmte Anwendungszwecke, beispielsweise die Anbringung an Dächern, geeignet sind. Es sind weiters bereits Sonnenkollektoren bekannt, welche aus elastischen Folien aufgebaut sind und für den Transport zusammengerollt werden können. Derartige Sonnenkollektoren müssen aber bei ihrem Betrieb mit relativ hohem Druck des Wärmemediums betrieben werden, um diese Kollektoren so weit aufzuweiten, daß ein einwandfreies Strömen des Wärmeträgermediums gewährleistet ist. Darüber hinaus haben derartige bekannte zusammenrollbare Sonnenkollektoren äußerst unbefriedigende Festigkeitseigenschaften und können leicht beschädigt werden. Die einwandfreie Strömung des Wärmeträgermediums in diesen bekannten zusammenrollbaren Sonnenkollektoren kann sehr leicht durch Knicke des Kollektors beim Verlegen oder durch mechanischen Druck auf einen solchen Kollektor unterbunden werden, und die Funktion eines solchen Kollektors ist daher beispielsweise bei Schneelast in keiner Weise sichergestellt. Eine derartige Ausbildung ist beispielsweise der US-A-3 823 703 zu entnehmen, welche auf Grund der Art der Anordnung der Leitungskanäle darüberhinaus nicht ohne weiteres auf beliebige Längen gekürzt werden kann, ohne daß es spezieller An- und Abschlußstücke bedarf.

Eine weitere aufrollbare transportable Einheit besteht aus von Schläuchen gebildeten Leitungskanälen und stangenartigen Haltemitteln, welche parallel zueinander und senkrecht zur Aufrollrichtung angeordnet sind. Diese aus der DE-A-2 540 497 bekannte Einrichtung ist aber nicht in dem Maße universell als Dachabdeckung, Sonnenkollektor, Fassadenverkleidung, wärmespendende Trennwände od. dgl., einsetzbar, und auch diese bekannt gewordene Ausbildung läßt sich nicht ohne weiteres auf gewünschte Unterlängen kürzen, wie dies für einen universellen Einsatz erforderlich wäre.

Die vorliegende Erfindung zielt nun darauf ab, ein besonders leicht herstellbares universelles Mehrzweck-Bauelement zu schaffen, welches den jeweiligen Bedürfnissen am Ort der Anbringung in Bezug auf Länge und Abmessung in einfacher Weise Rechnung trägt und mit welchem Dachabdeckungen, Sonnenkollektoren, Kaltdächer, Fassadenverkleidungen, Raumverkleidungen, Deckenisolierungen, Deckenheizungen, wärmespendende Trennwände, Fußbodenheizungen u. dgl., realisiert werden können.

Zur Lösung dieser Aufgabe ist das erfindungsgemäße Mehrzweck-Bauelement dadurch gekennzeichnet, daß der Träger aus vollem oder gitterförmigen Material besteht, an oder in welchem die Leitungskanäle in Längsrichtung des Trägers verlaufend angeordnet sind, wobei die Leitungskanäle mit dem Träger verbunden sind oder der Träger doppelwandig ausgebildet ist, wobei wenigstens ein Wandteil an seiner dem anderen Wandteil zugewendeten Innenseite Rillen aufweist bzw. profiliert ausgebildet ist, und die Leitungskanäle zwischen den beiden an den Berührungsstellen dicht miteinander verbundenen Wandteilen des doppelwandig ausgebildeten Trägers ausgebildet sind, und daß die aus Träger und Leitungskanälen gebildete Einheit mit einer Korrosionsschutzschicht versehen und um die quer zur Längsachse des Trägers verlaufende Achse unter Aufrechterhaltung eines freien Durchtrittsquerschnittes der Leitungskanäle aufrollbar ist. Ein derartiges Bauelement kann einfach wie ein Blechdach als Dachabdeckung verlegt werden, und kann nach Anschließen eines Wärmemediums an die Leitungskanäle als Sonnenkollektor verwendet werden. Das Bauelement kann beispielsweise in den Boden eingebettet werden und nach Anschließen von Leitungen für das Wärmemedium durch die Leitungskanäle des Bauelements als Fußbodenheizung eingesetzt werden. In analoger Weise lassen sich sich eine Vielzahl von Anwendungsgebieten, wie sie beispielsweise eingangs ausgeführt wurden, erschließen. Das Bauelement ist in einfacher Weise transportfähig und kann an Ort und Stelle auf die gewünschte Länge abgeschnitten werden, wobei dann nur noch die Leitungskanäle durch geeignete Abschluß- bzw. Anschlußglieder miteinander in Verbindung gebracht werden müssen. Dadurch, daß das Bauelement Leitungskanäle, welche zwischen den benachbarten Bahnen oder als Rohrleitungen ausgebildet sein können, aufweist, welche auch beim Aufrollen noch einen freien Durchtrittsquerschnitt der Leitungskanäle gewährleisten, wird eine hinreichend stabile Konstruktion geschaffen, in welcher bei Betrieb des Bauelements als Wärmetauscher das Wärmeträgermedium mit sehr geringem Druck strömen kann oder nahezu ohne Druck strömen kann, ohne daß die Funktion beeinträchtigt ist.

Zur Erhöhung der Flexibilität kann vorzugsweise der Träger quer zu seiner Längsrichtung profiliert ausgebildet sein. Derartige Profilierungen können vorzugsweise in Form von ziehharmonikaartigen Rillen bzw. Falten ausgebildet werden.

Das erfindungsgemäße Bauelement kann in einfacher Weise unter Verwendung von Blech- oder Streckmetallbahnen für das Trägermaterial hergestellt sein, wodurch sich eine besonders gute Wärmeaufnahme ergibt, wenn vorzugsweise die Leitungskanäle aus Metall, insbesondere weichem Stahl, bestehen, und durch Punkt- oder Rollnahtschweißung mit dem Träger verbunden sind. Blech- oder Streckmetallbahnen zeichnen sich durch hohe Flexibilität aus und können in einfacher Weise aufgerollt werden. Dadurch, daß die Leitungskanäle insbesondere aus weichem Stahl bestehen, ist auch die Aufrollbarkeit des Bauelements gesichert, und durch die Punkt- oder Rollnahtschweißung wird eine wärmeleitende Verbindung mit der vom Träger gebildeten Kühl- oder Absorberfläche erzielt.

Gemäß einer bevorzugten Ausführung weist das erfindungsgemäße Bauelement im Träger Aufnahmerillen für die Leitungskanäle auf, deren Achsen vorzugsweise in der Ebene des Trägers liegen. Auf diese Weise werden die Leitungskanäle beim Aufrollen des Bauelementes nur sehr gering verformt.

Bei der Ausbildung des Bauelements aus Blech- oder Streckmetall und der Leitungskanäle aus Metall, besteht der Korrosionsschutz bevorzugt aus einer Feuerverzinkung, durch welche die Wärmeabsorptionseigenschaften beim Einsatz als Sonnenenergiekollektor wesentlich verbessert werden. Ein derartiger Korrosionsschutz erlaubt aber auch die unmittelbare Einbettung des Bauelements in einen Fußbodenbelag, wobei es sich empfiehlt, beim Einbetten in einen vergossenen Fußbodenbelag einen Träger in Form einer Streckmetallbahn zu verwenden, oder aber Durchbrechungen in der Blechbahn vorzusehen, um die Verankerung zu verbessern.

Das erfindungsgemäße Bauelement kann aber auch einen Träger aus Kunststoff aufweisen, welcher mit Kunststoffrohren verklebt oder verschweißt ist.

Die Verlegung der Bahnen des Bauelements, insbesondere bei der Verwendung als Dachabdeckung, kann dadurch wesentlich vereinfacht werden, daß die Ränder der den Träger bildenden Bahn abgebogen sind. Benachbarte Ränder solcher Bahnen können in diesem Fall einfach von einem Federprofil umgriffen werden wodurch sich eine witterungsfeste und feuchtigkeitsundurchlässige Verbindung ergibt. Es kann aber auch über mehrere solcher paralleler Bahnen eine licht- oder infrarotdurchlässige Außenschicht gespannt werden, welche dann gleichzeitig den für Dachabdeckungen erforderlichen Feuchtigkeitsabschluß ergibt.

Das erfindungsgemäße Bauelement kann aber auch beispielsweise durch Trennsägen auf die gewünschte Länge gebracht und mit plattenförmigen Baumaterialien, beispielsweise plattenförmigen Trägern aus gewelltem Asbestzement, verbunden werden. Die auf diese Weise hergestellten Bauelemente können auch statisch tragende Funktionen übernehmen und in konventioneller Weise wie Dachziegel zur Abdeckung von Dächern verlegt werden, wobei lediglich für den geeigneten An- und Abschluß der Leitungskanäle Sorge getragen werden muß.

Bei Verlegung des erfindungsgemäßen Bauelements in Bahnen zur Dachabdeckung ist eine Oberfläche des Bauelements vorzugsweise mit einem Wärmedämmaterial, insbesondere Steinwolle, Glasfaservlies oder Kunststoffschaum, verbunden, wodurch gleichzeitig die gewünschten Wärmeisolationseigenschaften erzielt werden. Ein derartiges Bauelement kann aber auch als Fassade, Wandverkleidung, Deckenverkleidung od. dgl., verwendet werden, und in jeder dieser Verwendungen der Aufnahme oder Abgabe von Wärmeenergie dienen.

Erfindungsgemäß kann die Herstellung eines solchen Mehrzweck-Bauelements in äußerst wirtschaftlicher und einfacher Weise so erfolgen, daß von einer Vorratstrommel ein band- oder gitterförmiger Träger abgezogen wird, daß hierauf dem Träger von einer weiteren Vorratstrommel Rohrleitungen zugeführt werden, daß die Rohrleitungen mit dem Träger durch Schweißen oder Kleben verbunden werden, und daß das so gebildete Bauelement quer zur Längsachse des Trägers auf einer Rolle aufgerollt oder mit einem plattenförmigen Baumaterial verbunden und abgelängt wird.

Alternativ kann so vorgegangen werden, daß von einer ersten Vorratstrommel ein bandförmiger Träger abgezogen wird, daß in den Träger in Längsrichtung des Trägers verlaufende Rillen eingepreßt werden, daß hierauf von einer zweiten Vorratstrommel ein weiterer bandförmiger Träger abgezogen wird, welcher, gegebenenfalls nach Einpressen von Längsrillen, in Flächenkontakt mit dem verformten Träger der ersten Vorratstrommel gebracht wird, und daß die beiden Träger an ihren Berührungsstellen miteinander durch Schweißen oder Kleben verbunden werden. Das Bauelement kann hierbei gemeinsam mit einer Schicht aus flexiblem Isolationsmaterial, beispielsweise einem isolierenden Vlies, aufgerollt werden.

Die erfindungsgemäße Vorrichtung zur Durchführung dieses Verfahrens ist gekennzeichnet durch eine Einrichtung zum Abziehen und Transportieren des von einer Blechrolle ablaufenden Blechbandes, eine Stanzpresse, durch welche das von der Blechrolle abgezogene Blechband hindurchförderbar ist, Rollenhaspeln, von welchen über eine weitere Abzieh- und Transportvorrichtung Rohrleitungen abziehbar sind, einen Richtsatz, welchem das Blechband und die Rohrleitungen zur Begradigung vor dem Verschweißen des Blechbandes mit den Rohrleitungen zuführbar sind, einen Schweißautomaten zum Verbinden der Rohrleitungen mit dem profilierten Blechband, ein Zinkbad, welchem die aus dem Blechband und den aufgeschweißten Rohrleitungen bestehende Bahn zuführbar und durch welches die Bahn kontinuierlich hindurchführbar ist, und eine Abzieheinrichtung für die fertiggestellte Bahn, sowie eine Rolle zum Aufwinden der fertiggestellten Bahn, wobei vorzugsweise anschließend an das Zinkbad ein Beizbad, eine Trockeneinrichtung, eine Walze zum Aufbringen von Klebstoffen, eine Rolle für flexibles Isoliermaterial und Druckrollen zum Anpressen des Isoliermaterials angeordnet sind.

Die Erfindung wird nachfolgend an Hand von in der Zeichnung dargestellten Ausführungsbeispielen näher erläutert. In dieser zeigt

Fig. 1 einen Längsschnitt durch ein erfindungsgemäßes Bauelement,

Fig. 2 einen Schnitt nach der Linie II-II der Fig. 1,

Fig. 3 einen Schnitt analog der Fig. 2 durch ein weiteres Ausführungsbeispiel des erfindungsgemäßen Bauelements,

Fig. 4 und 5 schematisch die Verbindung benachbarter Bahnen des erfindungsgemäßen Bauelements,

Fig. 6 eine Teilansicht eines weiteren Ausführungsbeispieles eines erfindungsgemäßen Bauelements in der Draufsicht in Richtung des Pfeiles VI der Fig. 7, welche einen Querschnitt durch das in Fig. 6 gezeigte Bauelement darstellt,

Fig. 8 schematisch die Verlegung eines Bauelements gemäß den Fig. 6 und 7,

Fig. 9 schematisch die Darstellung einer erfindungsgemäßen Vorrichtung zur Herstellung eines erfindungsgemäßen Bauelements, und

Fig. 10 einen weiteren Teil der in Fig. 9 dargestellten Vorrichtung zur Herstellung der Ausbildungen des erfindungsgemäßen Bauelements gemäß den Fig. 1, 2 oder 3.

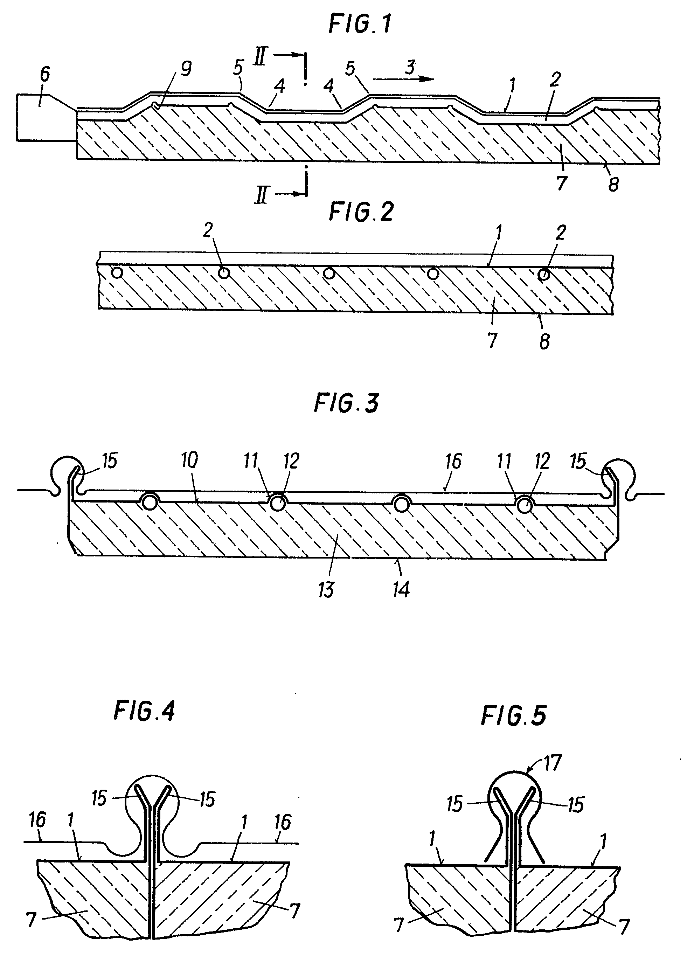

In Fig. 1 ist mit 1 ein aus einer Streckmetall-, Blech- oder Kunststoffbahn bestehender Träger bezeichnet, mit welchem als Rohre ausgebildete Leitungskanäle 2 durch Kleben oder Schweißen verbunden sind. Das Bauelement, welches aus dem Träger 1 und den Leitungskanälen 2 gebildet ist, ist bahnförmig ausgebildet und läßt sich quer zu seiner Längsrichtung, welche durch den Pfeil 3 bezeichnet ist, auf Trommeln aufwinden. Quer zur Längsrichtung des Bauelements sind Profilierungen 4, 5 vorgesehen, welche das Aufrollen erleichtern sollen. Die Profilierung des Bauelements erlaubt bei der Verwendung des Bauelements als Dachhaut eine regen- und schneedichte Überlappung, so daß eine ziegelähnliche Struktur entsteht. Die Leitungskanäle 2 sind am Ende des Bauelements mit einem Anschluß- bzw. Abschlußstück 6 verbunden und können auf diese Weise mit einem wärmeübertragenden Medium, beispielsweise Luft oder Wasser, durchströmt werden. Die Leitungskanäle 2 sind wärmeleitend mit dem Träger 1 verbunden und in eine Isolierschicht 7 eingebettet, welche im gezeigten Fall von einer Steinwollmatte gebildet ist. Derartige Steinwollmatten sind hinreichend flexibel, so daß auch ein mit einer derartigen Isolierschicht 7 vervollständigtes Bauelement ohne weiteres aufgerollt werden kann. Anstelle von Steinwollmatten können im Rahmen der Erfindung auch stabförmige Isolierkörper welche sich quer zur Längsrichtung des Bauelements erstrecken, vorgesehen sein, wodurch bei Auswahl geeigneter Isolierfestkörper ohne Beeinträchtigung der Flexibilität das Bauelement als statisch mittragendes Element eingesetzt werden kann. Als Innenschicht 8 ist je nach Bedarf eine Abschlußfolie aus Metall, Papier oder Kunststoff vorgesehen.

Die Verlegung des in Fig. 1 und 2 gezeigten Bauelements erfolgt in einfacher Weise entgegen der Richtung des Pfeiles 3 in horizontaler Richtung.

Die Leitungskanäle 2 können Einkerbungen oder Kontraktionen 9 aufweisen, um die Flexibilität weiter zu erhöhen. Im Falle der Ausbildungen der Leitungskanäle als Kanäle eines doppelwandig ausgebildeten Bauelements werden anstelle der Profilierungen 4, 5 und der Kontraktionen 9 zur Verbesserung der Flexibilität ziehharmonikaartige Rillen bzw. Falten vorgesehen.

Bei einer Ausbildung nach Fig. 3 ist ein Bauelement gezeigt, welches sich für die Verlegung in vertikaler Richtung eignet und am Dach analog konventionellen Blechdächern festgelegt werden kann. Die Ausbildung ist hier so getroffen, daß der Träger 10 in Längsrichtung der Bahn verlaufende Rillen 11 für die Aufnahme der als Rohre ausgebildeten Leitungskanäle 12 aufweist. Die Unterkonstruktion dieses Bauelements ist wiederum von einer Isolierschicht 13 und einer Abschlußfolie 14 gebildet, und die Ränder des Trägers 10 sind für die Abwinkelungen 15 vorbereitet. Auch dieses Bandelement läßt sich in einfacher Weise um eine quer zu den Leitungskanälen verlaufende Achse aufrollen. Die Abwinkelungen 15 können jederzeit durch eine einfache Rollvorrichtung kurz vor der Verarbeitung für die jeweils benötigte Länge vorgenommen werden. Bei größeren Längen empfiehlt es sich, den Stegfalz direkt auf dem Dach selbst in an sich bekannter Weise aufzubiegen. Die Leitungskanäle 12 werden in analoger Weise wie bei den Ausbildungen nach den Fig. 1 und 2 mit An- bzw. Abschlußstücken 6, beispielsweise durch Löten oder Stecken, verbunden, wobei mehrere solcher An- bzw. Abschlußstücke untereinander durch elastische Zwischenglieder zusammengeschlossen und abgedeckt werden können.

Die Verlegung der in Fig. 3 dargestellten Bahn kann in der in Fig. 4 oder 5 dargestellten Weise erfolgen. Bei der Darstellung nach Fig. 4 ist speziell für die Verwendung als Sonnenenergiekollektor eine licht- und infrarotdurchlässige Folie 16 über die Abwinkelungen 15 gerollt, wodurch sowohl die Leistungsfähigkeit des Sonnenenergiekollektors gesteigert, als auch die Verankerung und Abdichtung der Bahnen verbessert werden kann. Bei der Darstellung nach Fig. 5 sind federnde Profilleisten 17 über die Abwinkelungen 15 benachbarter Bahnen aufgeschoben, wodurch gleichfalls sowohl die Abdichtung als auch die Verankerung verbessert wird. Auch bei der Verwendung von licht- bzw. infrarotdurchlässigen Folien 16 kann die Begehbarkeit des Daches aufrecht erhalten werden, wenn beispielsweise in die lichtdurchlässige Folie 16 Quernuten eingearbeitet werden, welche an den Rillen 11 aufliegen. Bei Verwendung als Dach- oder Fassadenverkleidung ist auch die Isolierung abgesetzt anzubringen bzw. entsprechend zuzuschneiden.

Bei der Verwendung des erfindungsgemäßen Bauelements als Dachabdeckung kommen vor allen Dingen entsprechend korrosionsgeschützte Blechbahnen für den Träger 1 bzw. 10 in Frage. Die Bauelemente gemäß den Fig. 1 und 3 können aber auch im Innern von Räumen unter Putz oder im Fußboden verlegt werden, wobei sich in diesem Fall Gitter- oder Streckmetallträger besonders eignen.

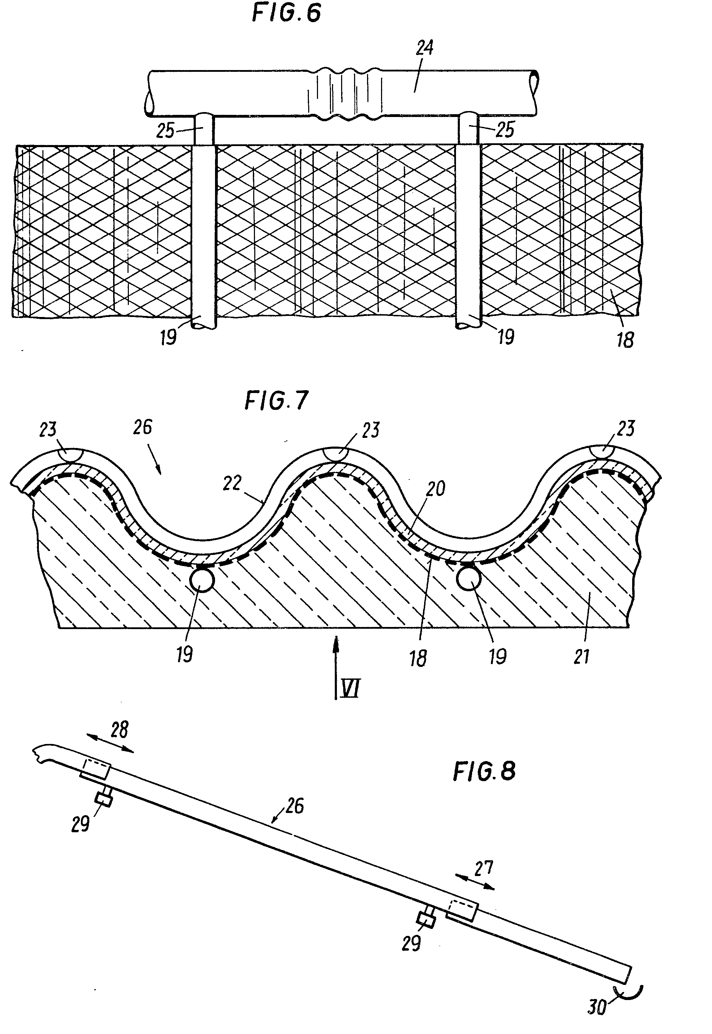

In Fig. 6 und 7 ist ein gitterförmiger Träger 18 vorgesehen, mit welchem als Rohre ausgebildete Leitungskanäle 19 verbunden sind. Das aus dem Träger 18 und den Leitungskanälen 19 bestehende Bauelement kann mit Asbestzement 20 verbunden werden, und der Asbestzement 20 ist bei der Darstellung nach Fig. 7 gewellt geformt. Die Leitungskanäle 19 sind wiederum in eine Isolierschicht 21 eingebettet. Die Außenseite dieses Bauelements wird wiederum zur Erhöhung des Wirkungsgrades bei Verwendung als Sonnenenergiekollektor mit einer lichtdurchlässigen Außenschicht 22, welche beispielsweise von einer GFK-Platte gebildet ist, versehen. Diese Außenschicht 22 wird durch isolierende Distanzstücke 23 in Abstand von der Asbestzementoberfläche gehalten. In Fig. 6 ist darüberhinaus ein Sammelrohr 24, an welches in vorbestimmten Abständen in die Leitungskanäle 19 einsteckbare Rohre 25 angeschlossen sind, dargestellt. Über dieses Sammelrohr 24 werden die einzelnen Leitungskanäle 19 mit Wärmemedium beaufschlagt. Ein derartiges eine Asbestzementschicht aufweisendes Bauelement 26 ist nun nicht mehr aufrollbar und kann in der in Fig. 8 dargestellten Weise nach Art von Dachziegeln unter gegenseitiger Überlappung in den Bereichen 27 und 28 zur Erzielung eines schneedruck- und witterungsfesten Daches verlegt werden. Mit 29 sind hierbei die Vor- und Rücklaufsammelrohre und mit 30 die Dachrinne bezeichnet. Durch Wahl der Länge der Überlappungen in den Bereichen 27 und 28 läßt sich auch hier mit nur geringer Anzahl verschiedener Bauelemente verschiedenen Bedürfnissen Rechnung tragen. Dadurch, daß das Bauelement 26 selbsttragend ist, ist keine gesonderte tragende Unterkonstruktion erforderlich und die Begehbarkeit des Daches gegeben.

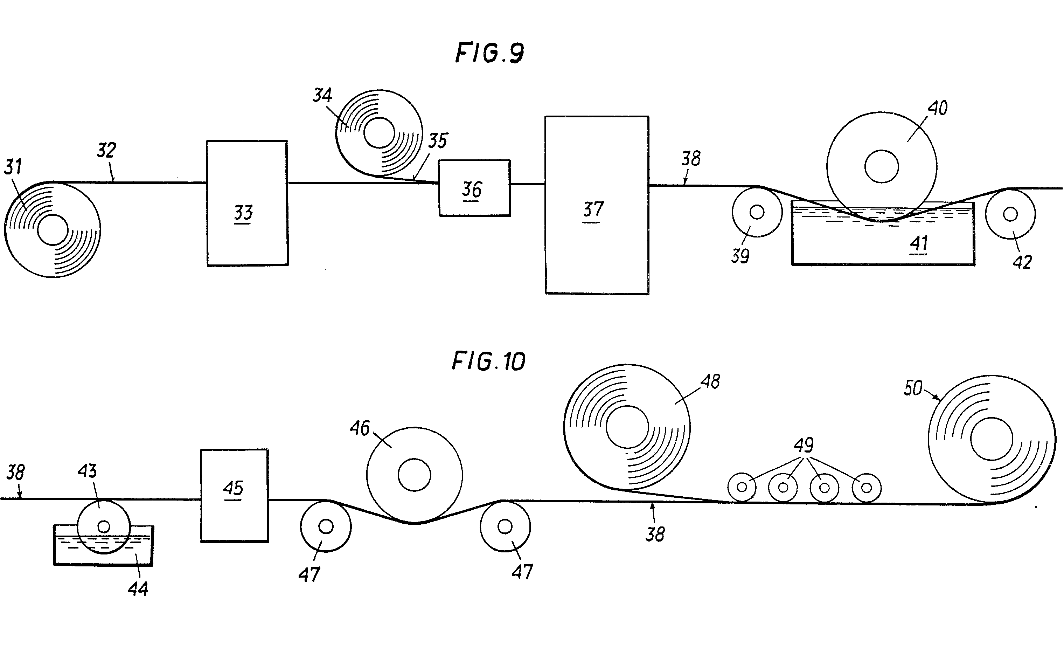

In Fig. 9 und 10 ist eine Vorrichtung dargestellt, mit welcher das erfindungsgemäße Bauelement kontinuierlich und vollautomatisch hergestellt werden kann. Mit 31 ist eine Blechrolle bezeichnet, von welcher ein Blechband 32 abgezogen wird und in einer Stanzpresse 33 vorgepreßt wird. Von Rollenhaspeln 34 werden Weichstahlrohre 35 abgespult und das Blechband 32 wird gemeinsam mit diesen Weichstahlrohren durch einen Richtsatz 36 zum Begradigen gefördert. Mit 37 ist schematisch ein Schweißautomat dargestellt, welcher die Weichstahlrohre 35 auf dem profilierten Blechband 32 befestigt. Die Bahn 38 des Bauelements tritt aus diesem Schweißautomat aus und wird über Umlenkrollen 39 unter Vermittlung einer Druckrolle 40 in einem Zinkbad 41 der Feuerverzinkung unterworfen. Das korrosionsgeschützte Bauelement wird über weitere Umlenkrollen 42 aus dem Zinkbad wieder herausgeführt und kann an dieser Stelle auf eine nicht dargestellte Rolle aufgerollt werden.

Die Vorrichtung kann aber noch durch die in Fig. 10 dargestellten Einrichtungen ergänzt werden, wobei in diesem Fall die Bahn 38 unmittelbar von den Umlenkrollen 42 abgezogen wird. Mit 43 ist eine Rolle zum Auftragen eines im Behälter 44 gespeicherten Beizmittels bezeichnet. Das gebeizte Produkt wird dann durch einen Trockentunnel 45 gefördert, worauf durch die Walze 46 Klebstoff auf die Bahn 38 aufgetragen wird, wobei die Bahn 38 durch Rollen 47 abgestützt ist. Von einer Rolle 48 wird Isoliermaterial abgezogen und durch die Andruckrollen 49 gegen die mit Klebstoff versehene Seite der Bahn 38 gepreßt. Die Bahn 38 des Bauelements wird hierauf zusammen mit dem Isolierbelag auf eine Rolle 50 aufgerollt. Wenn statisch tragende Elemente hergestellt werden sollen, entspricht der Fertigungsverlauf im wesentlichen der Darstellung gemäß den Fig. 9 und 10, und wird an geeigneter Stelle durch Abtrennen der Bahn 38, beispielsweise durch eine nicht dargestellte fliegende Trennscheibe unterbrochen. Dies kann beispielsweise an der Stelle des Übergangs von Fig. 9 zu Fig. 10 erfolgen.

Anstelle der Walze zum Auftragen des Klebstoffes und den nachfolgenden Einrichtungen zum Aufbringen eines Isoliermaterials kann auch eine Einrichtung zum Aufsprühen von Kunststoff-Hartschaum, beispielsweise Polyurethanhartschaum, vorgesehen sein. Das Produkt wird in diesen Fällen nicht aufgerollt, sondern abgelängt, und in Normlängen gelagert. Anstelle der Feuerverzinkungen kann eine Spritzverzinkung vorgesehen werden.

Auf Grund der Flexibilität des Blechbandes können beliebige Naßbeschichtungen vorgesehen werden, und es kann beispielsweise durch Farbwalzen eine außenseitige Beschichtung des Blechbandes vorgenommen werden, und es können Reinigungs-, Beiz-, Grundierungs-, Lakkierungs-, sowie andere chemische Aufbereitungsverfahren, beispielsweise zur Erzielung selektiver Beschichtungen in den Fabrikationsablauf einbezogen werden, ohne den Materialfluß des Werkstückes zu unterbrechen.

Die jeweils vorteilhaften Werkstoffe ergeben sich aus dem gewünschten Anwendungsgebiet. Anstelle von Rundrohren können selbstverständlich auch Flachrohre oder profilierte Blechschalen verarbeitet werden. Die Leitungskanäle können dabei im wesentlichen parallel zueinander verlaufen. Es ist jedoch ohne weiteres möglich, die Leitungskanäle mäanderförmig auszubilden.

Neben den bereits genannten Verwendungsgebieten als sonnenenergiesammelndes oder wärmeabgebendes Bauelement sind auch noch eine Reihe klimatechnischer Anwendungsmöglichkeiten gegeben, wobei beispielsweise ein Dach, eine Fassade, eine Wand oder ein Fußboden gekühlt wird.

Die Aufrollbarkeit des erfindungsgemäßen Bauelements kann durch Wahl der geeigneten Materialien sichergestellt werden. Bei Verwendung von Blech ist für die Bahn des Trägermaterials eine Blechstärke von 0,5 – 1,5 mm besonders geeignet. Die Durchmesser der Rohre, welche rund, dreieckig oder flach ausgebildet sein können, können bevorzugt zwischen 5 – 15 mm variieren, und als Kernrolldurchmesser für das erfindungsgemäße Bauelement kommen Werte zwischen 0,5 – 1,5 m in Frage.

Ein erfindungsgemäßes Ausführungsbeispiel wurde mit einem Blechträgerband einer Dicke von 0,6 mm und Rohren mit einem Durchmesser von 8 mm realisiert. Das erfindungsgemäße Bauelement wurde auf eine Rolle mit dem Durchmesser von 0,8 m aufgerollt.

## Patentansprüche

1. Mehrzweck-Bauelement, insbesondere Wärmetauscher, mit einem Träger (1, 10, 18) aus einer flexiblen langgestreckten Bahn, wobei an dem Träger Leitungskanäle (2, 12, 19) angeordnet sind, und die aus Träger und Leitungskanälen gebildete Einheit um eine quer zur Längsachse des Trägers verlaufende Achse aufrollbar ist, dadurch gekennzeichnet, daß der Träger (1, 10, 18) aus vollem oder gitterförmigem Material besteht, an oder in welchem die Leitungskanäle (2, 12, 19) in Längsrichtung des Trägers verlaufend angeordnet sind, wobei die Leitungskanäle mit dem Träger verbunden sind oder der Träger doppelwandig ausgebildet ist, wobei wenigstens ein Wandteil an seiner dem anderen Wandteil zugewendeten Innenseite Rillen (11) aufweist bzw. profiliert ausgebildet ist, und die Leitungskanäle zwischen den beiden an den Berührungsstellen dicht miteinander verbundenen Wandteilen des doppelwandig ausgebildeten Trägers ausgebildet sind, und daß die aus Träger (1, 10, 18) und Leitungskanälen (2, 12, 19) gebildete Einheit mit einer Korrosionsschutzschicht versehen und um die quer zur Längsachse des Trägers verlaufende Achse unter Aufrechterhaltung eines freien Durchtrittsquerschnittes der Leitungskanäle aufrollbar ist.

2. Mehrzweck-Bauelement nach Anspruch 1, dadurch gekennzeichnet, daß der Träger (1, 10, 18) von einer Blech- oder Streckmetallbahn gebildet ist.

3. Mehrzweck-Bauelement nach Anspruch 1 oder 2, dadurch gekennzeichnet, daß die Leitungskanäle (2, 12, 19) aus Metall, insbesondere weichem Stahl, bestehen, und durch Punkt- oder Rollnahtschweißung mit dem Träger (1, 10, 18) verbunden sind.

4. Mehrzweck-Bauelement nach einem der Ansprüche 1, 2 oder 3, dadurch gekennzeichnet, daß der Träger (1, 10, 18) quer zu seiner Längsrichtung profiliert (Profilierungen 4, 5) ausgebildet ist.

5. Mehrzweck-Bauelement nach einem der Ansprüche 1 bis 4, dadurch gekennzeichnet, daß der Träger (10) Aufnahmerillen (11) für die Leitungskanäle (12) aufweist, deren Achsen vorzugsweise in der Ebene des Trägers liegen.

6. Mehrzweck-Bauelement nach einem der Ansprüche 1 bis 5, dadurch gekennzeichnet, daß die Ränder (15) der den Träger (10) bildenden Bahn abgebogen sind.

7. Mehrzweck-Bauelement nach einem der Ansprüche 1 bis 6, dadurch gekennzeichnet, daß eine Seite eines abgelängten Bauelements (26) mit einem plattenförmigen Baumaterial oder das das Bauelement mit einem Wärmedämmaterial, insbesondere Steinwolle, Glasfaservlies oder Kunststoffschaum (7, 13, 21), verbunden ist.

8. Mehrzweck-Bauelement nach einem der Ansprüche 1 bis 7, dadurch gekennzeichnet, daß das Bauelement an seiner Außenseite mit einer licht- und infrarotdurchlässigen Außenschicht (16, 22) versehen ist.

9. Mehrzweck-Bauelement nach einem der Ansprüche 1 bis 8, dadurch gekennzeichnet, daß an einem Träger (10) aus Blech mit einer Stärke von 0,5 bis 1,5 mm, vorzugsweise 0,6 mm, Leitungskanäle (12) mit einem Durchmesser von 5 bis 15 mm, vorzugsweise Rohre mit einem Außendurchmesser von 8 mm angeordnet sind, und daß das Bauelement auf eine Rolle (50) mit einem Kernrolldurchmesser von 0,5 bis 1,5 m, vorzugsweise 0,8 m, aufrollbar ist.

10. Verfahren zur Herstellung eines Mehrzweck-Bauelements nach einem der Ansprüche 1 bis 9, dadurch gekennzeichnet, daß von einer Vorratstrommel (31) ein band- oder gitterförmiger Träger (32) abgezogen wird, daß hierauf dem Träger von einer weiteren Vorratstrommel (34) Rohrleitungen (35) zugeführt werden, daß die Rohrleitungen mit dem Träger durch Schweißen oder Kleben verbunden werden, und daß das so gebildete Bauelement quer zur Längsachse des Trägers auf einer Rolle (50) aufgerollt wird, oder mit einem plattenförmigen Baumeterial verbunden und abgelängt wird.

11. Verfahren zur Herstellung eines Mehrzweck-Bauelements nach einem der Ansprüche 1 bis 9, dadurch gekennzeichnet, daß von einer ersten Vorratstrommel ein bandförmiger Träger abgezogen wird, daß in den Träger in Längsrichtung des Trägers verlaufende Rillen eingepreßt werden, daß hierauf von einer zweiten Vorratstrommel ein weiterer bandförmiger Träger abgezogen wird, welcher, gegebenenfalls nach Einpressen von Längsrillen, in Flächenkontakt mit dem verformten Träger der ersten Vorratstrommel gebracht wird, und daß die beiden Träger an ihren Berührungsstellen miteinander durch Schweißen oder Kleben verbunden werden.

12. Verfahren nach Anspruch 10 oder 11, dadurch gekennzeichnet, daß das Bauelement gemeinsam mit einer Schicht aus flexiblem Isolationsmaterial, beispielsweise einem isolierenden Vlies, aufgerollt wird.

13. Vorrichtung zur Durchführung des Verfahrens nach Anspruch 10, 11 oder 12, gekennzeichnet durch eine Einrichtung zum Abziehen und Transportieren des von einer Blechrolle (31) ablaufenden Blechbandes (32), eine Stanzpresse (33), durch welche das von der Blechrolle abgezogene Blechband hindurchförderbar ist, Rollenhaspeln (34), von welchen über eine weitere Abzieh- und Transportvorrichtung Rohrleitungen (35) abziehbar sind, einen Richtsatz (36), welchem das Blechband und die Rohrleitungen zur Begradigung vor dem Verschweißen des Blechbandes mit den Rohrleitungen zuführbar sind, einen Schweißautomaten (37) zum Verbinden der Rohrleitungen mit dem profilierten Blechband, ein Zinkbad (41), welchem die aus dem Blechband und den aufgeschweißten Rohrleitungen bestehende Bahn (38) zuführbar und durch welches die Bahn kontinuierlich hindurchführbar ist, und eine Abzieheinrichtung für die fertiggestellte Bahn, sowie eine Rolle (50) zum Aufwinden der fertiggestellten Bahn.

14. Vorrichtung nach Anspruch 13, dadurch gekennzeichnet, daß anschließend an das Zinkbad (41) ein Beizbad (44), eine Trockeneinrichtung (45), eine Walze (46) zum Aufbringen von Klebstoffen, eine Rolle (48) für flexibles Isoliermaterial und Druckrollen (49) zum Anpressen des Isoliermaterials angeordnet sind.

**Claims**

1. Multi-purpose constructional element, in particular heat exchanger, comprising a carrier (1, 10, 18) consisting of a flexible elongate sheet, wherein conduits (2, 12, 19) are disposed on the carrier, and the unit formed of the carrier and the conduits can be wound up around an axis extending transversely to the longitudinal axis of the carrier, characterized in that the carrier (1, 10, 18) consists of solid or latticed material, on or in which the conduits (2, 12, 19) are arranged extending in longitudinal direction of the carrier, the conduits being connected to the carrier or the carrier being designed with double walls, at least one wall portion being provided with grooves (11) or formed with a profile on the inner side facing the other wall portion, and the conduits being formed between the two wall portions of the double-walled carrier sealingly connected to each other at the places of contact, and that the unit formed of carrier (1, 10, 18) and conduits (2, 12, 19) is provided with a corrosion-protective layer and can be wound up around the axis extending transversely to the longitudinal axis of the carrier, maintaining a free cross-sectional area of the conduits.

2. Multi-purpose constructional element according to claim 1, characterized in that the carrier (1, 10, 18) is made of a metal sheet strip or expanded metal strip.

3. Multi-purpose constructional element according to claim 1, characterized in that the conduits (2, 12, 19) are made of metal, in particular soft steel, and are connected to the carrier (1, 10, 18) by spot welding or roller seam welding.

4. Multi-purpose constructional element according to any of claims 1, 2 or 3, characterized in that the carrier (1, 10, 18) is formed with profiles (4, 5) extending transversely to its longitudinal direction.

5. Multi-purpose constructional element according to any of claims 1 to 4, characterized in that the carrier (10) is provided with receiving grooves (11) for the conduits (12), the axis of said grooves preferably being in the plane of the carrier.

6. Multi-purpose constructional element according to any of claims 1 to 5, characterized in that the rims (15) of the strip forming the carrier (10) are subrounded.

7. Multi-purpose constructional element according to any of claims 1 to 6, characterized in that one side of a constructional element (26) cut to length is connected to a plate-shaped constructional material or that the constructional element is connected to a thermal insulation material, in particular rock wool, glass fiber fleece or synthetic foam (7, 13, 21).

8. Multi-purpose constructional element according to any of claims 1 to 7, characterized in that the constructional element is provided on its external side with a light and infrared transmissive outer layer (16, 22).

9. Multi-purpose constructional element according to any of claims 1 to 8, characterized in that on a carrier (10) made of metal sheet having a thickness of from 0.5 to 1.5 mm, preferably 0.6 mm, conduits (12) having a diameter of from 5 to 15 mm, prederably pipes having an outer diameter of 8 mm, are arranged, and that the constructional element can be wound up to form a roll (50) having a core roll diameter of from 0.5 to 1.5 m, preferably 0.8 m.

10. Process for producing a multi-purpose constructional element according to any of claims 1 to 9, characterized in that a band-shaped or latticed carrier (32) is drawn off a suplly drum (31), that thereupon conduits (35) are guided to the carrier from a further supply drum (34), that the conduits are connected to the carrier by welding or gluing, and that the constructional element thus produced is wound up transversely to the longitudinal axis of the carrier on a reel (50), or connected to a plate-shaped constructional material and cut to length.

11. Process for producing a multi-purpose constructional element according to any of claims 1 to 9, characterized in that a band-shaped carrier is drawn off a first supply drum, that gooves extending in longitudinal direction of the carrier are pressed into the carrier, that thereupon a further band-shaped carrier is drawn off a second supply drum, which, if desired after the pressing of longitudinal grooves, is brought into area contact with the shaped carrier of the first supply drum, and that the two carriers are connected to each other at the places of contact by welding or gluing.

12. Process according to claim 10 or 11, characterized in that the constructional element can be wound up together with a layer of flexible insulation material, for instance an insulation fleece.

13. Apparatus for performing the process according to claim 10, 11 or 12, characterized by a device for drawing off and transporting the metal sheet strip (32) running off a metal sheet drum (31), by a stamping press (33) through which the metal sheet strip drawn off the metall sheet drum can be conveyed, by roll reels (34) from which conduits (35) can be drawn off via a further drawing off and transportation device, by a straightening device (36) to which the metal sheet strip and the conduits can be guided for straightening before welding of the metal sheet strip to the conduits, by an automatic welding machine (37) for connecting the conduits to the profiled metal sheet strip, by a zinc bath (41) to which the length of material (38) consisting of the metal sheet strip and the conduits welded thereonto can be guided and through which the length of material can be passed continuously, and by a drawing-off device for the finished length of material as well as by a reel (50) for winding up the finished length of material.

14. Apparatus according to claim 13, characterized in that subsequently to the zinc bath (41) a pickling bath (44), a drying device (45), a roller (46) for applying adhesive, a reel (48) for flexible insulation material and pressure rolls (49) for pressing the insulation material against the metal sheet are disposed.

## Revendications

1. Elément de construction à fonction multiple particulièrement échangeur de chaleur, comprenant un support (1, 10, 18) qui consiste en une bande étendue flexible et près duquel sont prévus des tuyaux conducteurs (2, 12, 19), l'unité formée du support et des tuyaux étant enroulable selon un axe orthogonal à l'axe longitudinal du support, ledit élément de construcktion étant caractérisé en ce que ce support (1, 10, 18) consiste en matière pleine ou perforée, que les tuyaux (2, 12, 19) sont disposés chez ou dans ce support le long de son extension longitudinale, que ces tuyaux sont joints au support ou le support est formé à deux parois, et que dans ce cas au moins une de ces parois (10) est profilée ou pourvue de gorges (11) à sa face interne tournée vers l'autre paroi (16), tandis que les tuyaux sont formés entre les deux parois qui sont jointes l'une à l'autre le long des lignes de contact, et que l'unité formée du support (1, 10, 18) et des tuyaux (2, 12, 19) est pourvue d'une couche anticorrosive et est enroulable selon l'axe orthogonal à l'axe longitudinal du support sans interrompre la libre largeur d'écoulement des tuyaux conducteurs.

2. Elément de construction à fonction multiple selon revendication 1, caractérisé en ce que le support (1, 10, 18) est formé d'une bande de tôle ou de métal déployé.

3. Elément de construction à fonction multiple selon les revendications 1 ou 2, caractérisé en ce que les tuyaux conducteurs (2, 12, 19) consistent en métal, particulièrement en acier doux et qu'ils sont joints au support (1, 10, 18) par soudage par points ou par soudage à la molette.

4. Elément de construction à fonction multiple selon quelqu'une des revendications 1, 2 ou 3, caractérisé en ce que le support (1, 10, 18) est pourvu de profilages (4, 5) orthogonaux à l'extension longitudinale du support.

5. Elément de construction à fonction multiple selon quelqu'une des revendications 1 à 4, caractérisé en ce que le support (10) est pourvu de gorges (11) pour recueillir les tuyaux conducteurs (12) les axes desquels sont situés de préférence dans le plan du support.

6. Elément de construction à fonction multiple selon quelqu'une des revendications 1 à 5, caractérisé en ce que les bords (15) de la bande qui forme le support (10) sont recourbés.

7. Elément de construction à fonction multiple selon quelqu'une des revendications 1 à 6, caractérisé en ce qu'un côté d'un élément de construction tronçonné (26) est lié avec une matière de construction en forme de plaques ou que l'élément de construction est lié avec un matériel calorifuge (7, 13, 21), notamment une laine minérale, un stratifié de verre filé, ou une matière plastique cellulaire.

8. Elément de construction à fonction multiple selon quelqu'une des revendications 1 à 7, caractérisé en ce que le côté extérieur de l'élément de construction est pourvu d'une couche perméable à la lumière et aux rayons infrarouges.

9. Elément de construction à fonction multiple selon quelqu'une des revendications 1 à 8, caractérisé en ce que des tuyaux conducteurs (12) ayant un diamètre de 5 jusqu'à 15 mm, et de préférence des tubes à un diamètre extérieur de 8 mm sont disposés chez un support (10) consistant en tôle de 0,5 jusqu'à 1,5 mm, de préférence 0,6 mm, et que l'élément de construction est enroulable sur un rouleau (50), le diamètre interne de roulement étant 0,5 à 1,5 m, de préférence 0,8 m.

10. Méthode de produire un élément de construction à fonction multiple selon quelqu'une des revendications 1 à 9, caractérisée en ce qu'un support (32) en bande ou perforé est déroulé d'un tambour provisionel (31), après quoi des tuyaux conducteurs (35) provenant d'un second tambour (34) sont amenés au support, que lesdits tuyaux sont joints avec le support par soudage ou collage, et que l'élément de construction produit de telle manière est enroulé en travers de l'axe longitudinal du support sur un tambour (50) ou qu'il est lié avec une matière de construction en forme de plaques et qu'il est tronçonné à longueur.

11. Méthode de produire un élément de construction à fonction multiple selon quelqu'une des revendications 1 à 9, caractérisée en ce qu'un support en bande est déroulé d'un premier tambour provisionel, que des gorges (11) sont enfoncées dans le support au sens longitudinal du support, après quoi un deuxième support en bande est déroulé d'un deuxième tambour, que ledit deuxième support après qu'y sont enfoncées, le cas échéant, des rainures longitudinales, est mis en contact de surface avec le support déformé provenant dudit premier tambour, et que ces deux supports sont joints l'un à l'autre par soudage ou collage aux endroits de leurs contacts réciproques.

12. La méthode de la revendication 10 ou 11, caractérisée en ce que l'élément de construction est enroulé en commun avec une flexible couche de matière isolante, par exemple, avec un stratifié isolant.

13. Dispositif pour exécuter la méthode des revendications 10, 11 ou 12, caractérisé par un arrangement pour dérouler et convoyer une bande de tôle (32) provenant d'un rouleau de tôle (31), par une presse à estamper (33) à travers de laquelle la bande de tôle provenant dudit rouleau de tôle peut être convoyée, par des tambours provisionels (34) desquels sont déroulables des tuyaux conducteurs (35) au moyen d'un autre arrangement de déroulage et de convoiement, par une dresseuse (36) à laquelle la bande de tôle et les tuyaux conducteurs peuvent être amenés pour être rectifiés avant que les tuyaux soient soudés à cette bande de tôle, par une soudeuse automatique (37) pour joindre les tuyaux à la bande profilée, par un bain de zinc (41) auquel la bande (38) qui comprend la tôle et les tuyaux soudés peut être amenée et au travers duquel ladite bande peut être transportée continuellement, et par un arrangement pour retirer la bande achevée et un tambour (50) pour enrouler la même.

14. Dispositif selon la revendication 13, caractérisé en ce qu'après le bain de zinc (41) sont disposés un bain de décapage (44), un dessicateur (45), un cylindre (46) pour appliquer la matière collante, un rouleau (48) pour la matière isolante flexible, et des rouleaux-presseurs (49) pour serrer la matière isolante.

FIG.1

FIG.2

FIG.3

FIG.4

FIG.5

0 009 472

## FIG.6

## FIG.7

## FIG.8

13

0 009 472

## FIG.9

## FIG.10